# EUROPÄISCHE PATENTSCHRIFT

(11) **EP 3 766 749 B1**
(45) Veröffentlichungstag und Bekanntmachung des Hinweises auf die Patenterteilung: **13.10.2021**
(21) Anmeldenummer: 20401038.3
(22) Anmeldetag: 22.06.2020
(51) Int. Cl.: B60T 1/14, B60T 17/00, B61H 7/02, F16D 63/00

(54) **BEHEIZBARE GLEISBREMSE**
HEATABLE RAIL BRAKE
FREIN DE VOIE POUVANT ÊTRE CHAUFFÉ

(30) Priorität: 15.07.2019 DE 102019119045
(43) Veröffentlichungstag der Anmeldung: 20.01.2021
(73) Patentinhaber: Deutsche Bahn AG, 10785 Berlin (DE)
(72) Erfinder: Drescher, Martin, 40822 Mettmann (DE)

(56) Entgegenhaltungen:
- CN-A- 109 532 789
- DE-U- 6 810 972

## Beschreibung

Die vorliegende Erfindung betrifft eine Gleisbremse, die mit einer Heizvorrichtung versehen ist.

Eine Gleisbremse ist aus der DE 10 2017 200 811 B3 bekannt. Die dort offenbarte elektrodynamische Gleisbremse ist zum Festhalten stehender oder zum Abbremsen laufender Räder von Schienenfahrzeugen ausgebildet. Die Gleisbremse besteht pro Schiene aus zwei gegenüberliegenden, in Längsrichtung zur Schiene befindlichen Bremsträgern, die auf den beiden Schenkeln eines querverschiebbaren, U-förmigen Trogkörpers befestigt sind, indem sich die Fahrschiene als Ferromagnet befindet. Die elektrodynamische Gleisbremse umfasst einen Einlaufbremsträger, einen Auslaufbremsträger sowie mehrere Mittelbremsträger, sogenannte Segmente. Jeder Bremsträger weist eine Übergangsschräge am Anfang und am Ende des jeweiligen Übergangbereiches zum Folgebremsträger mit mindestens zwei Führungslaschen und je zwei Stützböcken und mindestens eine segmentartige Aussparung auf, in denen austauschbare Bremsleisten befestigt sind, die in Längsrichtung durch Gelenkschalen und Gelenkbolzen voneinander getrennt sind, Zwischen dem Bremsträger und der Bremsleiste ist eine Dämmplatte angeordnet. An der Einlauf- und der Auslaufschräge des Bremsträger sowie einer Übergangsfläche zwischen Einlaufschräge und Bremsleiste ist in vertikaler Richtung eine Auftragsschweißung aufgebracht. DE6810972U beschreibt eine Schienenheizung die auch einen Schienenbremsschuh von unten heizt.

Der Erfindung liegt die Aufgabe zugrunde, Gleisbremsen hinsichtlich der Betriebsfähigkeit weiter zu verbessern.

Gelöst wird diese Aufgabe mit einer Gleisbremse nach Anspruch 1. Vorteilhafte Weiterbildungen der Erfindung sind in den Unteransprüchen angegeben.

Die erfindungsgemäße Gleisbremse ist zum Festhalten oder Abbremsen eines auf einer Schiene befindlichen Rades eines Schienenfahrzeugs ausgebildet. Die Gleisbremse weist einen zwei Schenkel umfassenden U-förmigen Trog auf. Je Schenkel weist die Gleisbremse eine auf dem Ende des Schenkels angeordnete Gleitleiste und einen auf der Gleitleiste in Querrichtung bewegbar angeordneten Bremsträger auf. Die Gleisbremse ist in eingebautem Zustand in der Weise zur Schiene angeordnet, dass die Schiene zwischen den Schenkeln des Trogs angeordnet ist. Erfindungsgemäß umfasst die Gleisbremse zumindest ein Heizelement zum Beheizen der Gleitleiste.

Damit verfügt die Gleisbremse über eine Heizfunktion. Es ist vorteilhaft die Witterungsfestigkeit der Gleisbremse erhöht. Ein Festfrieren des Bremsträgers an der Gleitleiste bei tiefen Temperaturen ist hiermit verhinderbar. Ein bereits festgefrorener Bremsträger ist leichter lösbar. Die Gleisbremse kann bis zu einer Temperatur von weniger als -25 C° betrieben werden.

In einer vorteilhaften Ausgestaltung der erfindungsgemäßen Gleisbremse ist das Heizelement in einer Aussparung am Ende des Schenkels des jeweiligen Troges angeordnet.

Damit kann das Heizelement gut auf die Gleitleiste wirken, ohne dass die Funktionsfähigkeit der Gleisbremse eingeschränkt ist.

In einer weiteren vorteilhaften Ausgestaltung der erfindungsgemäßen Gleisbremse ist der Bremsträger an einer zur Schiene gewandten Seite mit einer Bremsleiste versehen.

So kommen die mit dem Heizelement bewirkten Vorteile auch der Konstruktion mit auswechselbaren Bremsleisten zugute.

In einer weiteren vorteilhaften Ausgestaltung der erfindungsgemäßen Gleisbremse ist die Gleisbremse eine elektrodynamische Gleisbremse.

Damit kommen die mit dem Heizelement bewirkten Vorteile auch der Konstruktion mit elektrodynamischem Funktionsprinzip zugute.

In einer weiteren vorteilhaften Ausgestaltung der erfindungsgemäßen Gleisbremse ist das Heizelement mit einer Weichenheizungsanlage einer Weiche verbunden, insbesondere ist das Heizelement mit einer Station der Weichenheizungsanlage verbunden.

Damit ist es ermöglicht, den Betrieb des Heizelements an den Betrieb der Weichenheizungsanlage zu koppeln und das Heizelement auf eine einfache Weise zu steuern.

Alternativ zur Anbindung an eine bestehende Weichenheizungsanlage verfügt das Heizelement über eine separate Steuereinheit und kann mit einem Stellwerk verbunden sein.

Damit ist die Heizfunktion der Gleisbremse bei Bedarf und aus der Ferne steuerbar.

In einer weiteren vorteilhaften Ausgestaltung der erfindungsgemäßen Gleisbremse weist diese eine Temperaturermittlungseinheit auf.

Damit ist beispielsweise eine Ist-Temperatur direkt an der Gleisbremse bestimmbar, die dann zur Steuerung des Betriebs des Heizelements verwendbar ist. Zudem ist mit der Temperaturermittlungseinheit die Funktionsfähigkeit des Heizelements überprüfbar, insbesondere, wenn der Sensor in der Aussparung angeordnet ist. Weitere Vorteile der vorliegenden Erfindung sind aus der detaillierten Beschreibung und den Abbildungen ersichtlich. Die Erfindung wird anhand der Abbildung und der nachfolgenden Beschreibung näher erläutert. Es zeigt:

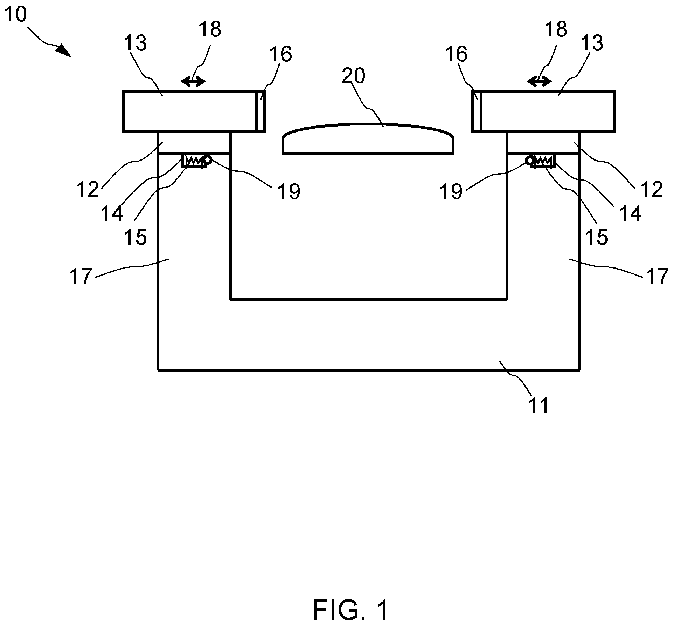

- Fig. 1: eine erfindungsgemäße Gleisbremse.

In der Fig. 1 ist die erfindungsgemäße Gleisbremse 10 in einer beispielhaften Ausgestaltung schematisch dargestellt. Die Fig. 1 zeigt die Gleisbremse 10 in einer üblichen Einbausituation. Die Gleisbremse 10 ist hierbei an einer Schiene 20 angeordnet, um ein auf der Schiene 20 stehendes oder laufendes Rad eines Schienenfahrzeugs abzubremsen oder festzuhalten. Das Rad des Schienenfahrzeugs ist in der Fig. 1 nicht dargestellt. Die Fig. 1 zeigt die Gleisbremse 10 und die Schiene 20 in einem Querschnitt mit Blick in Längsrichtung. Die Schiene 20 verläuft in Längsrichtung und die Gleisbremse 10 ist längs zur Schiene 20, insbesondere parallel zur Schiene 20 angeordnet.

Die Gleisbremse 10 umfasst einen Trog 11, der im Querschnitt eine U-Form aufweist und damit zwei Schenkel 17 enthält, die sich in der Einbausituation im Wesentlichen vertikal erstrecken und im Wesentlichen gegenüberliegend angeordnet sind. Die Gleisbremse 10 ist in der Einbausituation in der Weise zur Schiene 20 angeordnet, dass sich die Schiene 20 zwischen den beiden Schenkeln 17 befindet. Der Trog 11 ist aus metallischem Material gebildet, insbesondere wenn die Gleisbremse 10 als elektrodynamische Gleisbremse 10 ausgestaltet ist.

Die Gleisbremse 10 weist je Schenkel 17 eine Gleitleiste 12 auf, die am Ende des Schenkels 17 angeordnet ist. Die Gleitleiste 12 ist fest mit dem Schenkel 17 verbunden und besteht aus anderem Material als dieser.

Die Gleisbremse 10 weist je Schenkel 17 einen Bremsträger 13 auf. Der Bremsträger 13 ist in der Weise verschiebbar auf der Gleitleiste 12 angeordnet, dass dieser in Querrichtung 18 bewegbar ist. So wird der Bremsträger 13 bei einem Bremsvorgang in Richtung der Schiene 20 bewegt, wo der Bremsträger 13 auf ein auf der Schiene 20 befindliches Rad einwirken kann. Insbesondere weist der Bremsträger 13 hierfür an einer zur Schiene gerichteten Seite eine Bremsleiste 16 auf.

Erfindungsgemäß weist die Gleisbremse 10 zumindest ein Heizelement 15 auf, welches ausgebildet ist, die Gleitleiste 12 zu beheizen, insbesondere auf eine Temperatur oberhalb von 0 C° zu beheizen. Insbesondere weist die Gleisbremse 10 je Gleitleiste 12 zumindest ein Heizelement 15 auf. Das Heizelement 15 ist dabei insbesondere in einer Aussparung 14 angeordnet, die in dem Schenkel 17 an einer Grenzfläche zur Gleitleiste 12 angeordnet ist. In dieser Weise ist es in der Fig. 1 dargestellt. Die Aussparung 14 ist insbesondere eine Ausfräsung. Alternativ ist das Heizelement 15 in Gleitleiste 12 oder in dem Bremsträger 13 angeordnet.

Das Heizelement 15 ist ein elektrisches Heizelement 15. Die Gleisbremse 10 ist ausgebildet, dem Heizelement 15 mittels nicht dargestellter elektrischer Leitungen elektrische Energie zuzuleiten. Die elektrischen Leitungen verlaufen insbesondere in Kabelkanälen am Trog 11 entlang. Das Zuleiten elektrischer Energie zum Heizelement 15 und damit der Betrieb des Heizelements 15 ist insbesondere durch eine Steuereinheit automatisch gesteuert. Die Steuereinheit zum Steuern des Betriebs des Heizelements 15 ist beispielsweise Bestandteil der Gleisbremse 10 selbst. Alternativ ist es möglich, dass die Steuereinheit in einem Stellwerk angeordnet ist und das Heizelement 15 mit dem Stellwerk verbunden ist. Zudem kann die Gleisbremse 10 in der Weise ausgebildet sein, dass das Heizelement 15 manuell, beispielsweise durch einen Fahrdienstleiter, in einem Nahbereich steuerbar ist. Insbesondere ist es vorgesehen, dass die Gleisbremse 10 mit einer Weichenheizungsanlage einer in örtlicher Nähe angeordneten Weiche in der Weise verbunden, dass das Heizelement 15 dann im Betrieb ist, wenn die Weichenheizungsanlage der Weiche im Betrieb ist, also das Heizelement 15 heizt, wenn die Weichenheizungsanlage heizt. Insbesondere ist das Heizelement 15 an eine Station der Weichenheizungsanlage angeschlossen, über die die Stromzufuhr erfolgt.

Zum Feststellen der Temperatur der Gleisbremse 10 ist diese insbesondere mit zumindest einer Temperaturermittlungseinheit 19 versehen. Die Temperaturermittlungseinheit 19 ist beispielsweise ein Temperatursensor. Dieser kann beispielsweise in der Aussparung 14 angeordnet sein. In der Weise ist es in der Fig. 1 dargestellt. Die Temperaturermittlungseinheit 19 kann alternativ auch eine Wetterstation sein, die ausgebildet ist, die Temperatur selbst zu messen und/oder übermittelt zu bekommen.

### Bezugszeichenliste:

- 10: Gleisbremse
- 11: Trog
- 12: Gleitleiste
- 13: Bremsträger
- 14: Aussparung
- 15: Heizelement
- 16: Bremsleiste
- 17: Schenkel
- 18: Querrichtung
- 19: Temperaturermittlungseinheit
- 20: Schiene

## Patentansprüche

1. Gleisbremse (10) zum Festhalten oder Abbremsen eines auf einer Schiene (20) befindlichen Rades eines Schienenfahrzeugs, wobei die Gleisbremse (10) einen zwei Schenkel (17) umfassenden U-förmigen Trog (11) und je Schenkel (17) eine auf dem Ende des Schenkels (17) angeordnete Gleitleiste (12) und einen auf der Gleitleiste (12) in Querrichtung (18) bewegbar angeordneten Bremsträger (13) umfasst, wobei die Gleisbremse (10) in eingebautem Zustand in der Weise zur Schiene (20) angeordnet ist, dass die Schiene (20) zwischen den Schenkeln (17) des Trogs (11) angeordnet ist, **dadurch gekennzeichnet, dass** die Gleisbremse (10) zumindest ein Heizelement (15) zum Beheizen der Gleitleiste (12) umfasst.

2. Gleisbremse (10) nach Patentanspruch 1, **dadurch gekennzeichnet, dass** das Heizelement (15) in einer Aussparung (14) am Ende des Schenkels (17) angeordnet ist.

3. Gleisbremse (10) nach Patentanspruch 1 oder 2, **dadurch gekennzeichnet, dass** der Bremsträger (13) an einer zur Schiene (20) gewandten Seite mit einer Bremsleiste (16) versehen ist.

4. Gleisbremse (10) nach einem der Patentansprüche 1 bis 3, **dadurch gekennzeichnet, dass** die Gleisbremse (10) eine elektrodynamische Gleisbremse (10) ist.

5. Gleisbremse (10) nach einem der Patentansprüche 1 bis 4, **dadurch gekennzeichnet, dass** das Heizelement (15) mit einer Weichenheizungsanlage einer Weiche verbunden ist.

6. Gleisbremse (10) nach einem der Patentansprüche 1 bis 5, **dadurch gekennzeichnet, dass** das Heizelement (15) über eine Steuereinheit verfügt.

7. Gleisbremse (10) nach Patentanspruch 6, **dadurch gekennzeichnet, dass** das Heizelement (15) über die Steuereinheit mit einem Stellwerk verbunden ist.

8. Gleisbremse (10) nach einem der Patentansprüche 1 bis 7, **dadurch gekennzeichnet, dass** die Gleisbremse (10) eine Temperaturermittlungseinheit (19) aufweist.

## Claims

1. Rail brake (10) for detaining or braking a wheel, located on a rail (20), of a rail vehicle, wherein the rail brake (10) comprises a U-shaped trough (11) comprising two legs (17) and per leg (17) a gliding bar (12) arranged on the end of the leg (17) and a brake carrier (13) arranged on the gliding bar (12) so as to be moveable in transverse direction (18), wherein the rail brake (10) in the installed state is arranged in such a way in relation to the rail (20) that the rail (20) is arranged between the legs (17) of the trough (11), **characterised in that** the rail brake (10) comprises at least one heating element (15) for heating the gliding bar (12).

2. Rail brake (10) according to claim 1, **characterised in that** the heating element (15) is arranged in a recess (14) at the end of the leg (17).

3. Rail brake (10) according to claim 1 or 2, **characterised in that** the brake carrier (13) is equipped with a braking bar (16) on a side facing the rail (20).

4. Rail brake (10) according to any of claims 1 to 3, **characterised in that** the rail brake (10) is an electrodynamic rail brake (10).

5. Rail brake (10) according to any of claims 1 to 4, **characterised in that** the heating element (15) is connected with a point heating system of a point.

6. Rail brake (10) according to any of claims 1 to 5, **characterised in that** the heating element (15) has a control unit.

7. Rail brake (10) according to claim 6, **characterised in that** the heating element (15) is connected via the control unit with a railway control centre.

8. Rail brake (10) according to any of claims 1 to 7, **characterised in that** the rail brake (10) has a temperature determining unit (19).

## Revendications

1. Frein de voie (10) pour retenir ou freiner une roue d'un véhicule ferroviaire se trouvant sur un rail (20), dans lequel le frein de voie (10) comprend une auge en forme de U (11) comprenant deux branches (17) et, pour chaque branche (17), une glissière (12) disposée à l'extrémité de la branche (17) et un support de frein (13) disposé sur la glissière (12) de manière mobile en direction transversale (18), dans lequel le frein de voie (10) à l'état monté est disposé par rapport au rail (20) de sorte que le rail (20) est disposé entre les branches (17) de l'auge (11), **caractérisé en ce que** le frein de voie (10) comprend au moins un élément chauffant (15) pour chauffer la glissière (12).

2. Frein de voie (10) selon la revendication 1, **caractérisé en ce que** l'élément chauffant (15) est disposé dans un évidement (14) à l'extrémité de la branche (17).

3. Frein de voie (10) selon la revendication 1 ou 2, **caractérisé en ce que** le support de frein (13) est doté d'une barre de freinage (16) sur un côté orienté vers le rail (20).

4. Frein de voie (10) selon l'une quelconque des revendications 1 à 3, **caractérisé en ce que** le frein de voie (10) est un frein de voie électrodynamique (10).

5. Frein de voie (10) selon l'une quelconque des revendications 1 à 4, **caractérisé en ce que** l'élément chauffant (15) est connecté à un système de chauffage d'aiguillage d'un aiguillage.

6. Frein de voie (10) selon l'une quelconque des revendications 1 à 5, **caractérisé en ce que** l'élément chauffant (15) dispose d'une unité de commande.

7. Frein de voie (10) selon la revendication 6, **caractérisé en ce que** l'élément chauffant (15) est connecté à un actuateur par l'intermédiaire de l'unité de commande.

8. Frein de voie (10) selon l'une quelconque des revendications 1 à 7, **caractérisé en ce que** le frein de voie (10) présente une unité de détection de température (19).
